# DEMANDE DE BREVET EUROPEEN

(11) **EP 3 736 946 A1**
(43) Date de publication de la demande: **11.11.2020**
(21) Numéro de dépôt: 19305607.4
(22) Date de dépôt: 10.05.2019
(51) Int. Cl.: H02K 3/50, H02K 3/28, H02K 3/52

(54) **KIT DE RACCORDEMENT ELECTRIQUE, STATOR ET MACHINE ELECTRIQUE TOURNANTE ASSOCIES**

(71) Demandeur: GE Energy Power Conversion Technology Ltd., Warwickshire CV21 1BU (GB)
(72) Inventeur: GUILLON, Pierre, 54250 CHAMPIGNEULLES (FR)
(74) Mandataire: Casalonga

(57) **Abrégé**

Le kit de raccordement (16) électrique pour un stator polyphasé multipôle d'une machine électrique tournante, comprend une pluralité d'éléments conducteurs (18, 19, 20, 21) superposés et isolés électriquement de manière à former un circuit de raccordement électrique de chaque pôle de chacune des phases.

Le kit est destiné à être greffé sur un des côtés du stator.

## Description

La présente invention concerne les machines électriques tournantes, et se rapporte plus particulièrement aux raccordements électriques de bobines statoriques et aux raccordements électriques entre groupes de bobines statoriques.

Une machine électrique tournante est généralement alimentée par plusieurs phases comprenant chacune plusieurs pôles, chaque phase comprenant un nombre égal de pôles répartis uniformément sur la périphérie circulaire du stator de ladite machine.

En général, chaque pôle comprend plusieurs bobines reliées entre elles en série, les bobines étant insérées dans des encoches formées par des dents statoriques réalisées dans la culasse magnétique du stator.

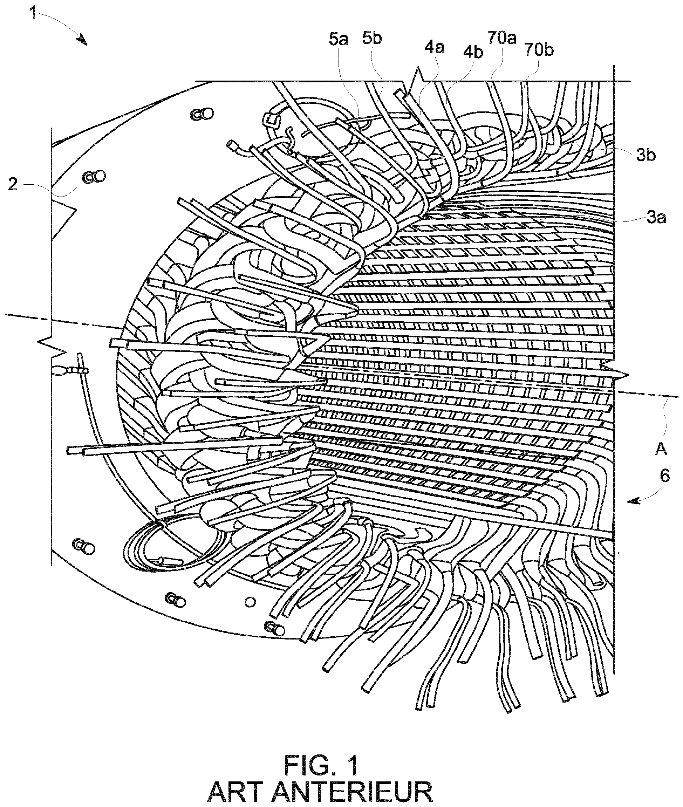

La figure 1 représente un stator bobiné 1 selon l'état de la technique.

Le stator 1 comprend une culasse magnétique 2 dans laquelle sont insérées des bobines 3, 4, 5, 70 régulièrement réparties sur la périphérie interne de la culasse.

Le stator comprend en outre un axe central A.

Les bobines 3, 4, 5, 70 comprennent chacune une queue haute 3a, 4a, 5a, 70a et une queue basse 3b, 4b, 5b, 70b destinées à être reliées en série avec une bobine adjacente ou à être raccordées à d'autres pôles de la phase considérée.

Les queues basses 3b, 4b, 5b, 70b sont disposées entre une périphérie extérieure du stator 1 et l'axe central A, les queues hautes 3a, 4a, 5a, 70a étant disposées entre les queues basses et l'axe central A.

Les queues hautes et basses sont situées du même côté débouchant 6 du stator 1.

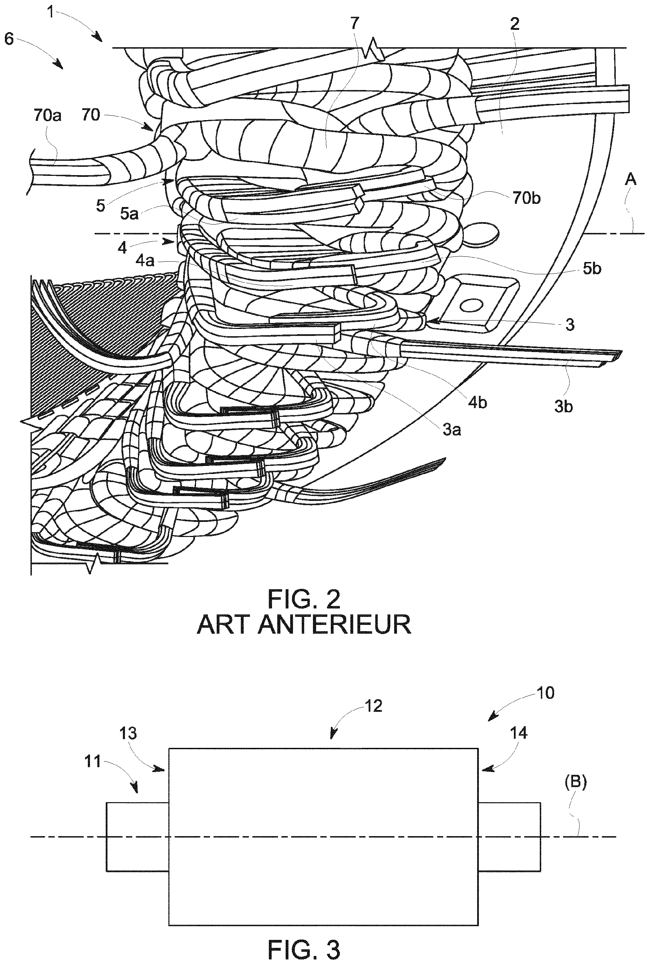

La figure 2 illustre une vue partielle du stator 1 dans lequel les bobines 3, 4, 5 et 70 sont reliées entre elles en série de manière à former un pôle.

La queue basse 3b et la queue haute 70a sont destinées à alimenter le pôle.

La queue basse 70b est reliée à la queue haute 5a, la queue basse 5b est reliée à la queue haute 4a et la queue basse 4b est reliée à la queue haute 3a.

Les queues haute et basse sont reliées entre elles par brasage.

Du mastic est appliqué sur chaque brasure, puis la brasure et les parties nues des queues sont recouvertes d'un isolant électrique 7.

Le mastic empêche que de l'air soit emprisonné entre l'isolant et les queues pour éviter la formation d'arc électrique (décharges partielles).

Lorsque tous les pôles de chacune des phases ont été formés, les pôles de chacune des phases sont raccordés de manière à former ladite phase en répétant les opérations de brasure, masticages et d'isolement électrique.

Cependant, les étapes de mise en série des bobines et de raccordement des pôles sont effectuées l'une après l'autre augmentant la durée de fabrication du stator 1.

Il est donc proposé de pallier tout ou partie des inconvénients de réalisation des stators selon l'état de la technique, notamment en diminuant la durée de fabrication du stator.

Au vu de ce qui précède, il est proposé un kit de raccordement électrique pour un stator polyphasé multipôle d'une machine électrique tournante, le kit comprenant une pluralité d'éléments conducteurs superposés et isolés électriquement de manière à former un circuit de raccordement électrique de chaque pôle de chacune des phases.

Le kit est destiné à être greffé sur un côté du stator.

Selon une caractéristique, chaque élément conducteur comprend des extrémités de raccordement destinées à être raccordées à au moins un pôle.

Il est proposé selon un autre aspect, un stator polyphasé multipôle pour machine électrique tournante comprenant un kit de raccordement électrique tel que défini précédemment, et comprenant des bobines insérées chacune dans une encoche de la culasse magnétique du stator, chaque phase comprenant un même nombre de bobines connectées entre elles en série de manière à former un pôle, le kit de raccordement électrique étant raccordé à chaque pôle de chacune des phases.

Selon une caractéristique, le kit de raccordement et les connexions entre les bobines sont disposés d'un même côté du stator.

De préférence, chaque pôle comprend un même nombre de bobines, les bobines comprenant une bobine d'entrée, au moins une bobine de mise en série et une bobine de sortie de sorte que les connexions entre les bobines débouchent d'un deuxième côté du stator, les bobines d'entrée et de sortie étant en outre raccordées au kit de raccordement greffé sur le premier côté du stator.

Avantageusement, la bobine d'entrée comprend deux queues basses disposées chacune d'un côté différent du stator, la bobine de mise en série comprend du deuxième côté du stator une queue haute et une queue basse, et la bobine de sortie comprend deux queues hautes disposées chacune d'un côté différent du stator, les bobines étant électriquement reliées entre elles de sorte qu'une première queue basse de la bobine d'entrée soit reliée avec la queue haute de la bobine de mise en série et la queue basse de la bobine de mise en série soit reliée avec une première queue haute de la bobine de sortie, les connexions entre les bobines débouchant du deuxième côté du stator, les deuxièmes queues basse et haute des bobines d'entrée et de sortie étant raccordées au kit de connexion greffé sur le premier côté du stator.

Il est proposé selon encore un autre aspect un stator polyphasé multipôle pour machine électrique tournante comprenant des bobines insérées chacune dans une encoche de la culasse magnétique du stator, chaque phase comprenant un même nombre de bobines connectées entre elles en série de manière à former un pôle.

Les connexions entre les bobines sont disposées d'un deuxième côté du stator, et les raccordements entre les pôles de chaque phase sont disposés du premier côté du stator.

Selon une caractéristique, chaque pôle comprend une bobine d'entrée, au moins une bobine de mise en série et une bobine de sortie, la bobine d'entrée comprenant deux queues basses disposées chacune d'un côté différent du stator, la bobine de mise en série comprenant du deuxième côté du stator une queue haute et une queue basse, et la bobine de sortie comprenant deux queues hautes disposées chacune d'un côté différent du stator, les bobines étant électriquement connectées entre elles de sorte qu'une première queue basse de la bobine d'entrée soit reliée avec la queue haute de la bobine de mise en série et la queue basse de la bobine de mise en série soit reliée avec une première queue haute de la bobine de sortie, les deuxièmes queues basse et haute des bobines d'entrée et de sortie étant raccordées aux pôles de ladite phase.

De préférence, le stator comprend un kit de raccordement électrique, le kit comprenant une pluralité d'éléments conducteurs superposés et isolés électriquement de manière à former un circuit de raccordement électrique de chaque pôle de chacune des phases, le kit étant greffé sur le premier côté du stator.

Avantageusement, chaque élément conducteur comprend des extrémités de raccordement raccordées à au moins un pôle.

Selon un autre aspect, il est proposé une machine électrique tournante comprenant un stator tel que défini précédemment.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- les figures 1 et 2, dont il a déjà été fait mention, illustrent un stator selon l'état de la technique ;
- la figure 3 illustre un mode de réalisation d'une machine électrique tournante polyphasée multipôle selon l'invention;
- les figures 4 et 5 illustrent un premier mode de réalisation du stator selon l'invention ;
- les figures 6 et 7 illustrent un exemple de mode de réalisation du kit de raccordement ;
- la figure 8 illustre un exemple de raccordement des pôles de la phase au kit de raccordement ;
- les figures 9 et 10 illustrent un deuxième mode de réalisation du stator selon l'invention ; et
- les figures 11 et 12 illustrent un troisième mode de réalisation du stator selon l'invention.

On se réfère à la figure 3 qui illustre un mode de réalisation d'une machine électrique tournante 10 polyphasée multipôle comprenant un rotor 11 inséré dans un stator 12 comprenant un axe central B, un premier côté débouchant 13 et un deuxième côté débouchant 14

La machine électrique tournante 10 peut par exemple être du type synchrone, asynchrone ou à courant continu, et les phases du stator 12 sont par exemple couplées en étoile simple ou double à neutre interne ou sorti, en triangle simple ou double, ou en couplage Dahlander.

La machine électrique tournante 10 peut fonctionner en mode générateur afin de produire une puissance électrique à partir d'une puissance mécanique ou en mode moteur afin de produire une puissance mécanique à partir d'une puissance électrique.

Dans ce qui suit, la machine électrique tournante 10 est par exemple du type triphasé et le stator 12 triphasé comprend par exemple deux paires de pôles par phase, chaque pôle comprenant quatre bobines, les phases étant par exemple reliées en étoile.

Bien entendu, le stator 12 peut comprendre un nombre différent de paires de pôles comprenant un nombre différents de bobines, les phases étant reliées selon d'autres configurations qu'une configuration du type en étoile.

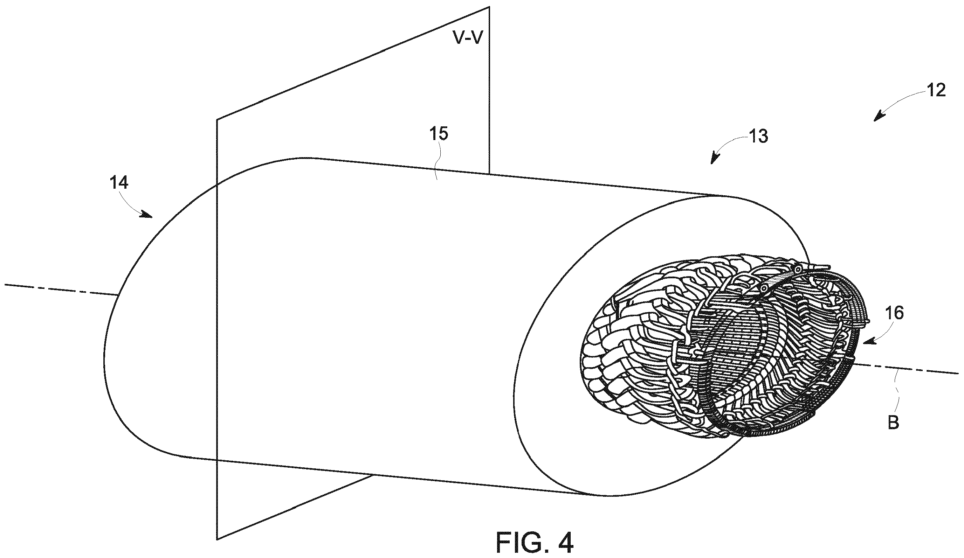

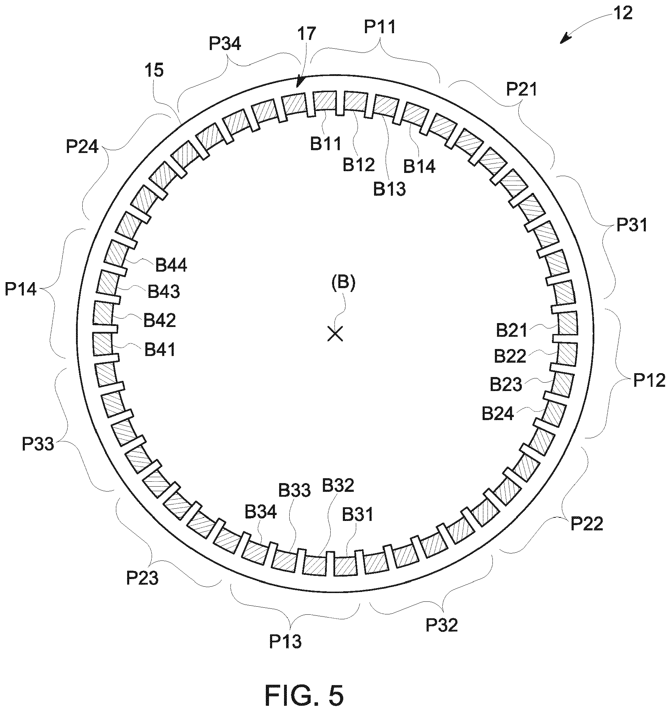

On se réfère aux figures 4 et 5 qui illustrent une vue en coupe et un schéma électrique d'un premier mode de réalisation du stator 12.

Le stator 12 comprend une culasse magnétique 15 et un kit de raccordement électrique 16 formant un circuit de raccordement électrique de chaque pôle de chacune des trois phases du stator 12.

Chaque phase comprend un même nombre de paire de pôles et chaque pôle comprend un même nombre de bobines reliées en série, les pôles étant de constitution identique.

Chaque phase du stator 12 comprend seize bobines regroupées en deux paires de pôles, chaque pôle comprenant quatre bobines identiques.

Les bobines de chaque pôle sont reliées en série, deux pôles étant reliés en série par des liaisons entre groupes et deux groupes de deux pôles étant reliés en parallèle.

On se réfère plus particulièrement à la figure 5 qui illustre une coupe selon la direction V-V du stator 12.

Une première phase P1 comprend quatre pôles P11, P12, P13 et P14, une deuxième phase P2 comprend quatre pôles P21, P22, P23 et P24 et une troisième phase P3 comprend quatre pôles P31, P32, P33 et P34.

Les bobines des phases P1, P2 et P3 sont identiques.

Comme les phases sont de constitution identique, dans un souci de simplification, seule la phase P1 est détaillée dans ce qui suit.

Les pôles P11, P12, P13 et P14 de la phase P1 comprennent respectivement chacun quatre bobines B11, B12, B13 et B14, B21, B22, B23 et B24, B31, B32, B33 et B34, B41, B42, B43 et B44 identiques insérées chacune dans une encoche 17 de la culasse magnétique 15.

Chaque pôle P11, P12, P13 et P14 comprend une bobine d'entrée B11, B21, B31 et B41, et une bobine de sortie B14, B24, B34 et B44

Chaque bobine comprend une queue haute QH et une queue basse QB.

Les queues haute QH et basse QB des bobines d'entrée et de sortie d'un même pôle raccordées à un autre pôle sont disposées du premier côté 13 débouchant du stator 12.

Le kit de raccordement 16 est greffé sur le premier côté 13 du stator 12 et est raccordé à chaque pôle de chacune des phases P1, P2 et P3, les raccords entre le kit de raccordement 16 et les pôles étant situés du premier côté 13. Les connexions de mise en série des bobines de chaque pôle P11, P12, P13 et P14 sont situées du premier côté 13.

En variante, les queues haute QH et basse QB des bobines d'entrée et de sortie d'un même pôle raccordées à un autre pôle sont disposées du deuxième côté 14 débouchant du stator 12, le kit de raccordement 16 étant greffé sur le deuxième côté 14 du stator 12, et les raccords entre le kit de raccordement 16 et les pôles étant situés du deuxième côté 14. Les connexions de mise en série des bobines de chaque pôle P11, P12, P13 et P14 sont situées du deuxième côté 14.

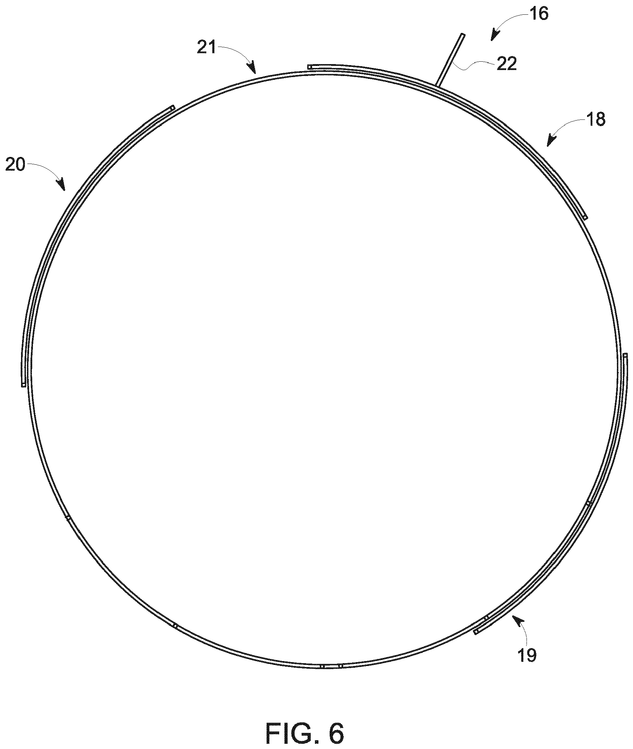

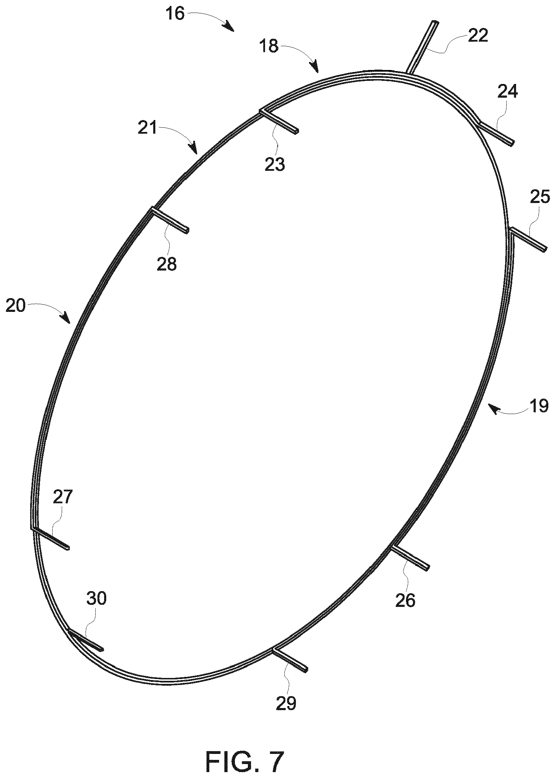

On se réfère aux figures 6 et 7 qui illustrent un exemple de mode de réalisation du kit de raccordement 16.

Afin de simplifier les figures 6 et 7, seuls les raccordements des pôles P11, P12, P13 et P14 de la phase P1 sont représentés.

Le kit de raccordement 16 comprend une pluralité d'éléments conducteurs 18, 19, 20 et 21 superposés et isolés électriquement (l'isolant électrique n'est pas représenté) de manière à former un circuit de raccordement électrique de chaque pôle P11, P12, P13 et P14 de la phase P1.

L'élément conducteur 21 forme le neutre et les éléments conducteurs 18, 19 et 20 raccordent les pôles entre eux.

L'élément conducteur 18 comprend une extrémité 22 destinée à alimenter la phase P1.

Les éléments conducteurs 18, 19, 20 et 21 comprennent des extrémités de raccordement 23, 24, 25, 26, 27, 28, 29 et 30 raccordés aux pôles.

Les éléments conducteurs 18, 19 et 20 comprenant les extrémités de raccordement sont par exemple réalisés en cuivre et obtenus par exemple par pliage sur champ ou par pliage à plat de cuivre méplat.

L'extrémité 22 d'alimentation de la phase P1 est rapportée sur l'élément conducteur 21, par exemple par brasure.

Le kit de raccordement 16 forme par exemple une couronne, les éléments conducteurs étant maintenus entre eux par frettage.

Le kit de raccordement 16 est réalisé sans brasure ou soudure de sorte qu'aucun élément saillant n'endommage les isolants électriques recouvrant les éléments conducteurs.

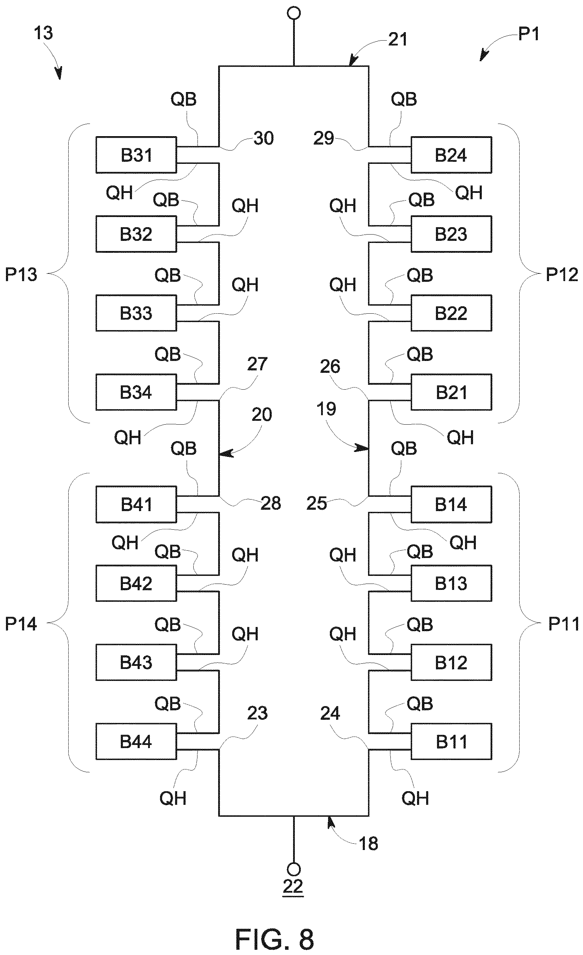

La figure 8 illustre un exemple de raccordement des pôles de la phase P1 au kit de raccordement 16.

Les bobines d'un même pôle sont reliées entre elles en série de sorte qu'une queue haute QH d'une bobine soit raccordée à une queue basse QB d'une bobine adjacente.

Les queues hautes QH des bobines B11 et B44 des pôles P11 et P14 sont raccordées à l'élément conducteur 18 par l'intermédiaire des extrémités de raccordement 24 et 23.

Les queues basses QB des bobines B14 et B41 sont respectivement raccordées aux queues hautes QH des bobines B21 et B34 des pôles P12 et P13 par l'intermédiaire éléments conducteurs 19 et 20, les bobines B14 et B21 étant reliées par l'intermédiaire des extrémités de raccordement 25 et 26, et les bobines B41 et B34 étant reliées par l'intermédiaire des extrémités de raccordement 27 et 28.

Les queues basses QB des bobines B24 et B31 sont raccordées à l'élément conducteur 21 par l'intermédiaire des extrémités de raccordement 29 et 30.

Les bobines sont raccordées aux extrémités de raccordement des éléments conducteurs par exemple par brasure, masticage puis isolation électrique des parties nues et des brasures.

Selon un autre mode de réalisation, les raccordements peuvent être réalisés en intervertissant les queues hautes QH et basses QB des bobines reliées au kit 16.

Le kit de raccordement 16 peut être réalisé indépendamment de la réalisation du stator bobiné comprenant la culasse magnétique 15.

Le kit de raccordement 16 peut par exemple être réalisé en avance pour être stocké avant la réalisation du stator bobiné.

De plus, seuls les raccordements entre les bobines et les extrémités de raccordement du kit de connexion sont réalisés sur une ligne de production permettant de réduire le temps de passage du stator sur ladite ligne de production, réduisant ainsi la durée globale de fabrication du stator.

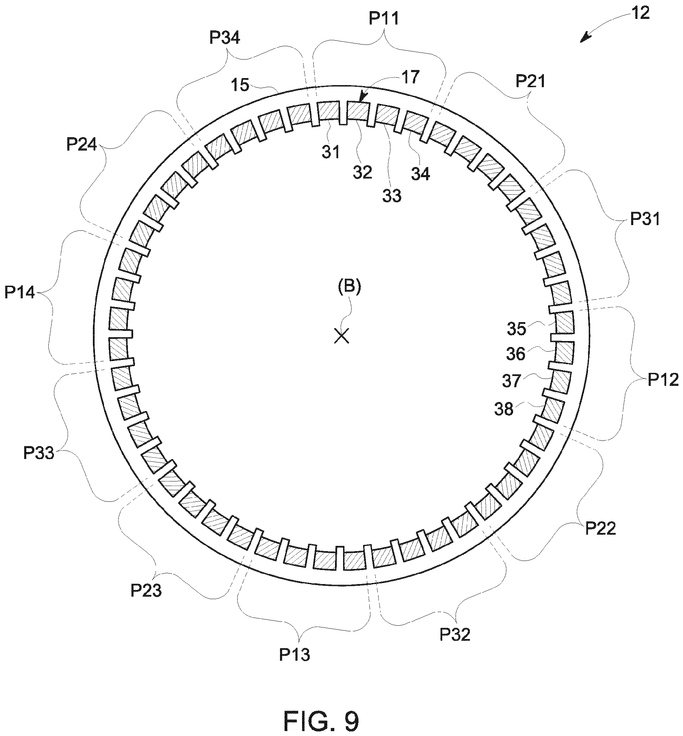

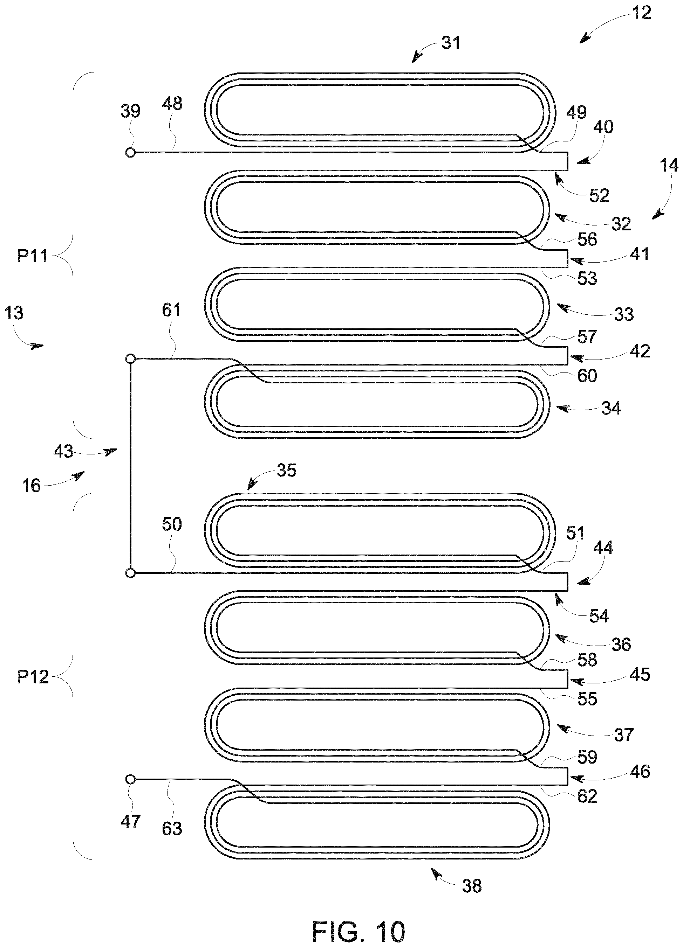

On se réfère aux figures 9 et 10 qui illustrent une vue en coupe et une vue schématique du raccordement de bobines d'un deuxième mode de réalisation du stator 12.

Le stator 12 comprend la première phase P1 comprenant les quatre pôles P11, P12, P13 et P14, la deuxième phase P2 comprenant quatre pôles P21, P22, P23 et P24 et la troisième phase P3 comprenant les quatre pôles P31, P32, P33 et P34.

Les pôles de chaque phase sont reliés en série, chaque pôle comprenant un même nombre de bobines identiques.

Les bobines des phases P1, P2 et P3 sont identiques.

Comme les phases et les pôles sont de constitution identique, dans un souci de simplification, seule les pôles P11 et P12 de la phase P1 sont détaillés dans ce qui suit.

On se réfère plus particulièrement à la figure 10 qui illustre les connexions électriques des pôles P11 et P12 carcasse 15 du stator 12 retirée.

Chaque pôle P11, P12 comprend une bobine d'entrée 31, 35, deux bobines de mise en série 32, 33 et 36, 37 et une bobine de sortie 34 et 38.

La bobine d'entrée 31 du pôle P11 est raccordée d'une part par exemple à des moyens d'alimentation électrique (non représentés) par l'intermédiaire d'un premier raccordement 39 et, d'autre part, connectée à la première bobine de mise en série 32 par une première connexion 40.

La première bobine de mise en série 32 est connectée par une deuxième connexion 41 à la deuxième bobine de mise en série 33.

La deuxième bobine de mise en série 33 est connectée par une troisième connexion 42 à la bobine de sortie 34.

La bobine de sortie 34 est raccordée à la bobine d'entrée 35 du pôle P12 par l'intermédiaire d'un deuxième raccordement 43.

En outre, la bobine d'entrée 35 du pôle P12 est connectée à la première bobine de mise en série 36 par une quatrième connexion 44.

La première bobine de mise en série 36 est connectée par une cinquième connexion 45 à la deuxième bobine de mise en série 37.

La deuxième bobine de mise en série 37 est connectée par une sixième connexion 46 à la bobine de sortie 38.

La bobine de sortie 38 est raccordée par l'intermédiaire d'un troisième raccordement 47 au pôle P13.

Les connexions 40, 41, 42, 44, 45 et 46 entre les bobines 31, 32, 33, 34, 35, 36, 37 et 38 sont disposées du deuxième côté 14 du stator 12, et les raccordements 39, 43 et 47 entre les pôles sont disposés du premier côté 13 du stator 12.

Selon un autre mode de réalisation, chaque pôle peut comprendre une seule bobine de mise en série ou plus de deux bobines de mise en série, les bobines étant raccordées en série de sorte que les connexions entre les bobines sont disposées d'un premier côté du stator, et les raccordements entre chaque pôle sont disposés d'un deuxième côté du stator.

Selon encore un autre mode de réalisation, chaque pôle peut comprendre une seule bobine du type bobine d'entrée ou bobine de sortie, la bobine étant raccordée de sorte que les connexions entre les bobines sont disposées d'un premier côté du stator, et les raccordements entre chaque pôle sont disposées d'un deuxième côté du stator.

Comme les connexions sont disposées du deuxième côté 14 du stator opposé au premier côté 13 du stator comprenant les raccordements, les opérations de brasage, de masticage et d'isolation électrique des connexions et des raccordements peuvent être exécutées simultanément réduisant la durée de fabrication du stator 12.

Bien entendu, les connexions et les raccordements peuvent être effectués par un autre procédé.

Les bobines d'entrée et de sortie 31, 34, 35 et 38 comprennent une demi-spire de plus ou de moins que les bobines de mise en série 32, 33, 36 et 37 de manière à comprendre respectivement deux queues basses et deux queues hautes.

Chaque bobine d'entrée 31, 35 comprend deux queues basses 48, 49, 50, 51 disposées l'une 49, 51 du deuxième côté 14 du stator 12 et l'autre 48, 50 du premier côté 13 du stator 12, chaque bobine de mise en série 32, 33, 36 et 37 comprend du deuxième côté 14 du stator une queue haute 52, 53, 54 et 55 et une queue basse 56, 57, 58 et 59, et chaque bobine de sortie 34, 38 comprend deux queues hautes 60, 61, 62 et 63 disposées l'une 60, 62 du deuxième côté du stator 14 et l'autre 61, 63 du premier côté 13 du stator 12.

La première queue basse 49, 51 de la bobine d'entrée 31, 35 est reliée à la queue haute 52, 54 de la première bobine de mise en série 32, 36 par l'intermédiaire de la première connexion 40 et de la quatrième connexion 44, la queue basse 56, 58 de la première bobine mise en série 32, 36 est reliée à la première queue haute 53, 55 de la deuxième bobine de mise en série 33, 37 par l'intermédiaire de la deuxième connexion 41 et de la cinquième connexion 45, la deuxième queue haute 57, 59 de la deuxième bobine de mise en série 33, 37 est reliée à la première queue haute 60, 62 de la bobine de sortie 34, 38 par l'intermédiaire de la troisième connexion 42 et de la sixième connexion 46.

La deuxième queue basse 48 de la bobine d'entrée 31 est raccordée au premier raccordement 39, la deuxième queue haute 61 de la bobine de sortie 34 et la deuxième queue basse 50 de la bobine d'entrée 35 sont raccordées au deuxième raccordement 43, et la deuxième queue haute 63 de la bobine de sortie 38 est raccordée au troisième raccordement 47.

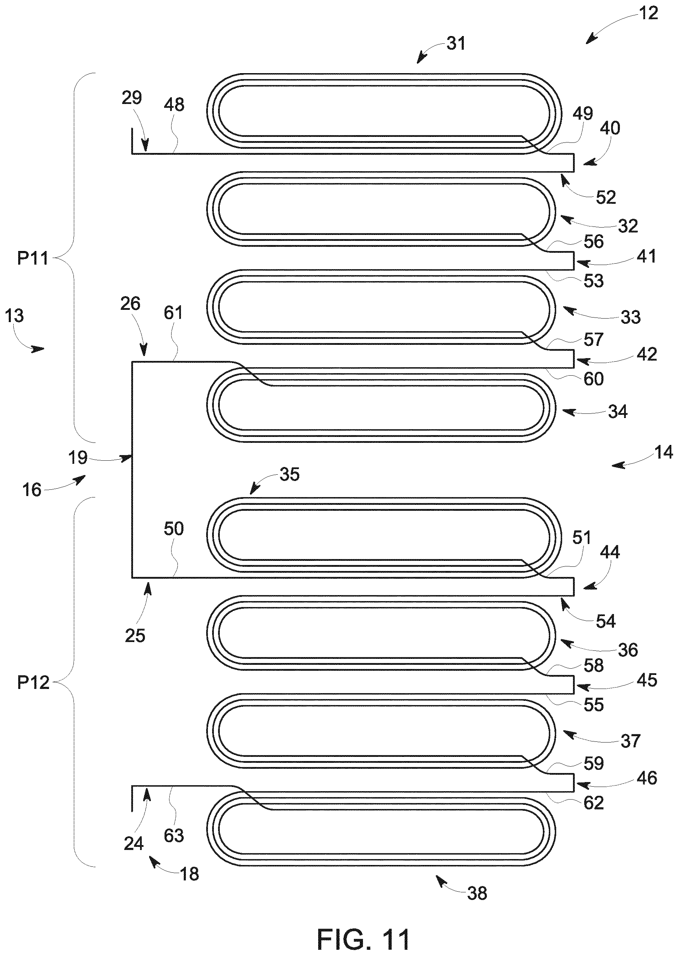

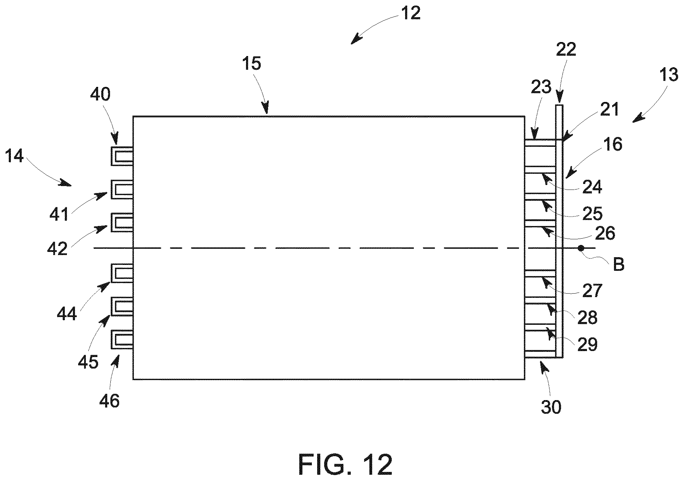

Les figures 11 et 12 illustrent une vue schématique du raccordement de bobines et une vue d'un troisième mode de réalisation du stator 12.

Ce mode de réalisation diffère du deuxième mode de réalisation illustré aux figures 9 et 10 en ce que les pôles sont raccordés au kit de raccordement 16.

La deuxième queue basse 48 de la bobine d'entrée 31 est raccordée au raccordement 29 du kit de raccordement 16, la deuxième queue haute 61 de la bobine de sortie 34 et la deuxième queue basse 50 de la bobine d'entrée 35 sont raccordées aux extrémités de raccordement 25 et 26 de l'élément conducteur 19 du kit de raccordement 16, et la deuxième queue haute 63 de la bobine de sortie 38 est raccordée à l'extrémité de raccordement 24 du kit de connexion 16.

Comme le kit de raccordement 16 peut être réalisé indépendamment de la réalisation du stator comprenant la culasse magnétique 15, et les connexions sont disposées du deuxième côté 14 du stator opposé au premier côté 13 du stator comprenant les raccordements, les opérations de brasage, de masticage et d'isolation électrique des connexions et des raccordements peuvent être exécutées simultanément réduisant la durée de fabrication du stator 12. La durée des opérations de raccordement est réduite par rapport aux opérations de raccordement effectuées dans le deuxième mode de réalisation.

Ce mode de réalisation du stator 12 permet de réduire encore plus la durée de fabrication du stator par rapport aux modes de réalisations précédents.

## Revendications

1. Kit de raccordement (16) électrique pour un stator polyphasé multipôle d'une machine électrique tournante, le kit comprenant une pluralité d'éléments conducteurs (18, 19, 20, 21) superposés et isolés électriquement de manière à former un circuit de raccordement électrique de chaque pôle (P11, P12, P13, P14, P21, P22, P23, P24, P31, P32, P33, P34) de chacune des phases (P1, P2, P3), **caractérisée en ce que** le kit est destiné à être greffé sur un côté (13) du stator.

2. Kit selon la revendication 1, dans lequel chaque élément conducteur (18, 19, 20, 21) comprend des extrémités de raccordement (23, 24, 25, 26, 27, 28, 29) destinées à être raccordées à au moins un pôle (P11, P12, P13, P14).

3. Stator polyphasé multipôle (12) pour machine électrique tournante comprenant un kit de raccordement électrique (16) selon l'une des revendications 1 et 2, et comprenant des bobines (B11, B12, B13, B14, B21, B22, B23, B24, B31, B32, B33, B34, B41, B42, B43, B44, 31, 32, 33, 34, 35, 36, 37, 38) insérées chacune dans une encoche (17) de la culasse magnétique (15) du stator, chaque phase (P1, P2, P3) comprenant un même nombre de bobines connectées entre elles en série de manière à former un pôle (P11, P12, P13, P14, P21, P22, P23, P24, P31, P32, P33, P34), le kit de raccordement électrique étant raccordé à chaque pôle de chacune des phases.

4. Stator selon la revendication 3, dans lequel le kit de raccordement (16), et les connexions entre les bobines (B11, B12, B13, B14, B21, B22, B23, B24, B31, B32, B33, B34, B41, B42, B43, B44) sont disposés d'un même côté (13) du stator.

5. Stator selon la revendication 3, dans lequel chaque pôle (P11, P12) comprend un même nombre de bobines (31, 32, 33, 34, 35, 36, 37, 38), les bobines comprenant une bobine d'entrée (31, 35), au moins une bobine de mise en série (32, 33, 36, 37) et une bobine de sortie (34, 38) de sorte que les connexions (40, 41, 42, 44, 45, 46) entre les bobines débouchent d'un deuxième côté (14) du stator, les bobines d'entrée (31, 35) et de sortie (34, 38) étant en outre raccordées au kit de raccordement (16) greffé sur le premier côté (13) du stator.

6. Stator selon la revendication 5, dans lequel la bobine d'entrée (31, 35) comprend deux queues basses (48, 49, 50, 51) disposées chacune d'un côté (13, 14) différent du stator (12), la bobine de mise en série (32, 33, 36, 37) comprend du deuxième côté (14) du stator une queue haute (52, 53, 54, 55) et une queue basse (56, 57, 58, 59), et la bobine de sortie (34, 38) comprend deux queues hautes (60, 61, 62, 63) disposées chacune d'un côté différent (13, 14) du stator, les bobines étant électriquement reliées entre elles de sorte qu'une première queue basse (49, 51) de la bobine d'entrée soit reliée avec la queue haute (52, 54) de la bobine de mise en série et la queue basse de la bobine de mise en série soit reliée avec une première queue haute (60, 62) de la bobine de sortie, les connexions (40, 41, 42, 44, 45, 46) entre les bobines débouchant du deuxième côté (14) du stator, les deuxièmes queues basse (48, 50) et haute (61, 63) des bobines d'entrée et de sortie étant raccordées au kit de connexion (16) greffé sur le premier côté (13) du stator.

7. Stator polyphasé multipôle (12) pour machine électrique tournante comprenant des bobines (31, 32, 33, 34, 35, 36, 37, 38) insérées chacune dans une encoche (17) de la culasse magnétique (15) du stator, chaque phase comprenant un même nombre de bobines connectées entre elles en série de manière à former un pôle (P11, P12), **caractérisé en ce que** les connexions (40, 41, 42, 44, 45, 46) entre les bobines sont disposées d'un deuxième côté (14) du stator, et les raccordements (43) entre les pôles de chaque phase (P1) sont disposés du premier côté (13) du stator.

8. Stator selon la revendication 7, dans lequel chaque pôle (P11, P12) comprend une bobine d'entrée (31, 35), au moins une bobine de mise en série (32, 33, 36, 37) et une bobine de sortie (34, 38), la bobine d'entrée comprenant deux queues basses (48, 49, 50, 51) disposées chacune d'un côté (13, 14) différent du stator, la bobine de mise en série comprenant du deuxième côté (14) du stator une queue haute (52, 53, 54, 55) et une queue basse (56, 57, 58, 59), et la bobine de sortie comprenant deux queues hautes (60, 61, 62, 63) disposées chacune d'un côté (13, 14) différent du stator, les bobines étant électriquement connectées entre elles de sorte qu'une première queue basse (49) de la bobine d'entrée soit reliée avec la queue haute (52) de la bobine de mise en série et la queue basse de la bobine de mise en série soit reliée avec une première queue haute (60, 62) de la bobine de sortie, les deuxièmes queues basse (48, 50) et haute (61, 63) des bobines d'entrée et de sortie étant raccordées aux pôles de ladite phase (P1).

9. Stator selon l'une des revendications 7 à 8, comprenant un kit de raccordement électrique, le kit comprenant une pluralité d'éléments conducteurs (18, 19, 20, 21) superposés et isolés électriquement de manière à former un circuit de raccordement électrique de chaque pôle (P11, P12, P13, P14, P21, P22, P23, P24, P31, P32, P33, P34) de chacune des phases (P1, P2, P3), le kit étant greffé sur le premier côté (13) du stator.

10. Stator selon la revendication 9, dans laquelle chaque élément conducteur (18, 19, 20, 21) comprend des extrémités de raccordement (23, 24, 25, 26, 27, 28, 29) raccordées à au moins un pôle (P11, P12, P13, P14).

11. Machine électrique tournante (10) comprenant un stator (12) selon l'une quelconque des revendications 3 à 10.
